# EUROPEAN PATENT APPLICATION

(11) **EP 3 139 430 A1**
(43) Date of publication of application: **08.03.2017**
(21) Application number: 16187120.7
(22) Date of filing: 02.09.2016
(51) Int. Cl.: H01M 4/68, H01M 4/73, H01M 4/82

(54) **BATTERY GRID WITH NON-PLANAR PORTIONS**

(30) Priority: 04.09.2015 US 201562214553 P; 26.08.2016 US 201615248089
(71) Applicant: Oak Press Solutions Inc., Sturgis, MI 49091 (US)
(72) Inventor: Lancaster, Kenneth Willard, Sturgis, MI 49091 (US); Littlefield, Richard Lee, Bronson, MI 49028 (US); Harker, Brian Joseph, Sturgis, MI 49091 (US)
(74) Representative: Potter Clarkson LLP

(57) **Abstract**

Embodiments include a grid for a battery. The grid can include a grid network bordered by at least one frame element having a current collector lug. The grid network can include a plurality of spaced apart generally vertically extending and generally horizontally extending grid wire elements. Each grid wire element has opposed ends. Each opposed end can be joined to one of a plurality of nodes to define a plurality of open spaces. Selected ones of the grid wire elements being joined at one of their ends to the one or more frame elements, wherein the wire elements have a cross-section that comprises at least one concave surface. Other embodiments are also included herein.

## Description

### Claim of priority

This application claims the benefit of U.S. Provisional Application No. 62/214,553, filed September 4, 2015, the content of which is herein incorporated by reference in its entirety.

### Field of the Technology

The present application relates to an electrode for a lead acid battery, hereinafter referred to as a grid. More specifically, the present application relates to a grid that includes a wire that has a cross-section with a non-planar surface.

### Background

Battery grids used in lead acid batteries are frequently coated with an active material. The active material can be involved in the electrochemical reaction to produce a current. Increasing the surface area of the battery grid can result in more contact area with the active material. Additional contact area between the active material and the battery grid can result in better conductivity between the active material and the battery grid, along with better adhesion and cohesion between the active material and the grid. This can result in an increase in overall battery performance and efficiency.

The active material can cover a battery grid. Portions of a battery grid that are not covered by the active material can corrode at a much quicker rate than portions that are covered by the active material.

### Summary

Embodiments disclosed herein include a method of making a grid for a battery. The method comprises punching material out of a strip of material to form a grid network of a plurality of wires bordered by at least one frame element having a current collector lug and forming the plurality of wires of the grid with a die to change the cross-sectional shape of the wires. Forming the plurality of wires can result in a cross-section of one of the plurality of wires to comprise at least one concave surface.

In an embodiment, the cross-section comprises at least two concave surfaces.

In an embodiment, the cross-section comprises at least one planar surface.

In an embodiment, the cross-section comprises at least one convex surface.

In an embodiment, the cross-section does not include any planar surfaces.

In an embodiment, the material comprises lead alloy.

In an embodiment, the method can further comprise forming a controlled surface roughness having a size of about 10 micro inches Ra to 1000 micro inches Ra on the at least one concave surface to promote adhesion to the concave surface of the wire of a subsequently applied and cured battery paste.

In an embodiment, the cross-section has a perimeter length and a cross-sectional area, wherein a ratio between the perimeter length and the cross-sectional area is at least 4.01:1.

Embodiments disclosed herein include a grid for a battery. The grid can comprise a grid network bordered by at least one frame element having a current collector lug. The grid network comprises a plurality of spaced apart generally vertically extending and generally horizontally extending grid wire elements. Each grid wire element has opposed ends, each opposed end being joined to one of a plurality of nodes to define a plurality of open spaces, selected ones of the grid wire elements being joined at one of their ends to the one or more frame elements. The wire elements have a cross-section that comprises at least one concave surface.

In an embodiment, the cross-section comprises a first axis, a second axis, a first concave surface, a second concave surface, a third concave surface and a fourth concave surface. The first axis is perpendicular to the second axis. The first concave surface and the second concave surface are mirror images of each other across the first axis. The third concave surface and the fourth concave surface are mirror images of each other across the first axis. The second concave surface and the third concave surface are mirror images of each other across the second axis, and the first concave surface and the fourth concave surface are mirror images of each other across the second axis.

In an embodiment, the cross-section comprises a first axis, a second axis, a first concave surface, a second concave surface, a first convex surface and a second convex surface. The first axis is perpendicular to the second axis. The first concave surface and the second concave surface are on the same side of the first axis as each other. The first convex surface and the second convex surface are on the same side of the first axis as each other, and the first concave surface and the second concave surface are on the opposite side of the first axis as the first convex surface and the second convex surface. The first concave surface and the second concave surface are mirror images of each other across the second axis, the first convex surface and the second convex surface are mirror images of each other across the second axis.

In an embodiment, the grid can further comprise a plurality of nodes, wherein each node comprises the connection of at least two vertically extending wire elements and at least two horizontally extending wire elements.

In an embodiment, the cross-section comprises at least two concave surfaces.

In an embodiment, the cross-section comprises at least one planar surface.

In an embodiment, the cross-section comprises at least one convex surface.

In an embodiment, the cross-section does not include any planar surfaces.

In an embodiment, the wire elements comprise lead alloy.

In an embodiment, the cross-section has a perimeter length and a cross-sectional area, wherein a ratio between the perimeter length and the cross-sectional area is at least 4.01:1.

In an embodiment, a grid for a battery comprises a grid network bordered by at least one frame element. The at least one of the frame elements has a current collector lug. The grid network comprises a plurality of spaced apart generally vertically extending and generally horizontally extending grid wire elements. Each grid wire element has opposed ends. Selected ones of the grid wire elements being joined at one of their ends to the at least one frame element. Each opposed end being joined to one of a plurality of nodes to define a plurality of open spaces. Each of the plurality of open spaces extends from a front plane of the grid to a back plane of the grid, across from one generally horizontally extending grid wire element to an adjacent generally horizontally extending grid wire element and across from one generally vertically extending grid wire element to an adjacent generally vertically extending grid wire element. At least a portion of each of the plurality of open spaces are bordered by concave surfaces of the wires.

In an embodiment, a node comprises the connection of at least two generally vertically extending wire elements and at least two generally horizontally extending wire elements.

In an embodiment, a cross-section of one of the generally vertically or horizontally extending wire elements comprises at least two concave surfaces.

In an embodiment, a cross-section of one of the generally vertically or horizontally extending wire elements comprises at least at least one concave surface and one planar surface.

In an embodiment, a cross-section of one of the generally vertically or horizontally extending wire elements includes at least one convex surface and at least one concave surface.

In an embodiment, a cross-section of one of the generally vertically or horizontally extending wire elements does not include any planar surfaces.

In an embodiment, the wire elements comprise lead alloy.

Embodiments disclosed herein include a tool for forming a battery grid. The tool for forming a battery grid can include a first die portion. The first die portion can define a first forming channel configured to form a portion of a grid wire to have a similar shape as the first forming channel when the portion of the grid wire is formed within the first forming channel. In some embodiments, the first forming channel comprises a cross-section with at least one convex surface configured to form a concave surface into a cross-section of the grid wire.

In an embodiment, the tool for forming a battery grid can further include a second die portion. The second die portion can define a second forming channel configured to form a second portion of the grid wire to have a similar shape as the second forming channel when the second portion of the grid wire is formed within the second forming channel. In some embodiments, the second forming channel comprises a cross-section with at least one convex surface configured to form a concave surface into a cross-section of the grid wire. In various embodiments, the first forming channel is aligned with the second forming channel to partially enclose the grid wire within the first die portion and the second die portion.

This summary is an overview of some of the teachings of the present application and is not intended to be an exclusive or exhaustive treatment of the present subject matter. Further details are found in the detailed description and appended claims. Other aspects will be apparent to persons skilled in the art upon reading and understanding the following detailed description and viewing the drawings that form a part thereof, each of which is not to be taken in a limiting sense. The scope of the present application is defined by the appended claims and their legal equivalents.

### Brief Description of the Figures

The technology may be more completely understood in connection with the following drawings, in which:
FIG. 1 is a perspective view of a grid for a battery, according to an embodiment.
FIG. 2 is a front view of a grid for a battery, according to an embodiment.
FIG. 3 is a cross-section of a frame of a grid along line E-E in FIG. 2, according to an embodiment.
FIG. 4 is a cross-section of a wire, according to an embodiment.
FIG. 5 is a cross-section of a wire, according to an embodiment.
FIG. 6 is a cross-section of a wire, according to an embodiment.
FIG. 7 is a cross-section of a wire, according to an embodiment.
FIG. 8 is a cross-section of a wire, according to an embodiment.
FIG. 9 is a cross-section of a wire, according to an embodiment.
FIG. 10 is a cross-section of a wire, according to an embodiment.
FIG. 11 is a cross-section of a wire, according to an embodiment.
FIG. 12 is a cross-section of a wire, according to an embodiment.
FIG. 13 is a cross-section of a portion of a grid, according to an embodiment.
FIG. 14 is a cross-section of a portion of a grid, according to an embodiment.
FIG. 15 is a flow chart depicting a method of making a grid, according to an embodiment.
FIG. 16, including FIGS 16A-16D, shows a side-by-side comparison of four example wire shape cross-sections with identical cross-sectional areas.
FIG. 17 is a schematic of a forming system, according to an embodiment.
FIG. 18 is a cross-section of a forming tool, according to an embodiment.

While the technology is susceptible to various modifications and alternative forms, specifics thereof have been shown by way of example and drawings, and will be described in detail. It should be understood, however, that the application is not limited to the particular embodiments described. On the contrary, the application is to cover modifications, equivalents, and alternatives falling within the spirit and scope of the technology.

### Detailed Description

The embodiments of the present technology described herein are not intended to be exhaustive or to limit the technology to the precise forms disclosed in the following detailed description. Rather, the embodiments are chosen and described so that others skilled in the art can appreciate and understand the principles and practices of the present technology.

All publications and patents mentioned herein are hereby incorporated by reference. The publications and patents disclosed herein are provided solely for their disclosure. Nothing herein is to be construed as an admission that the inventors are not entitled to antedate any publication and/or patent, including any publication and/or patent cited herein.

Certain terminology will be used in the following description for convenience in reference only and will not be limiting. The words "up", "down", "right" and "left" will designate directions in the drawings to which reference is made. The words "in" and "out" will refer to directions toward and away from, respectively, the geometric center of the device and designated parts thereof. Such terminology will include derivatives and words of similar import.

The amount of adhesion and cohesion between active material or battery paste and the battery grid can be affected by the amount of surface area contact between the active material and the grid. The grid wires that make up at least a portion of the battery grid can have a cross-section that includes at least one non-planar portion, such as a concave portion, of the outer perimeter, also referred to herein as a non-planar surface. Grid wires that have a non-planar portion of their cross-section can have up to 10% more surface area than a similar grid wire of equal cross-sectional area with only planar portions. The additional surface area contact between the grid and the active material can increase the adhesion and cohesion between the grid and the active material.

In various battery grids having sloped or angled surfaces, the active material can be susceptible to straight line shearing, where the active material can fracture and slide off a planar surface of the wire element, leaving a portion of the grid exposed and susceptible to corrosion. Battery grids that have grid wires as described herein with non-planar portions can have a lesser chance of a piece or portion of the active material sliding off of the surface due to straight line shearing and the pull of gravity, when compared to battery grids without any non-planar portions. As a result, the chances of the active material separating, falling off, or shearing off of the grid can be reduced. Further, a battery grid with a non-planar surface can reduce the chances of active material disconnecting from the battery grid and thereby possibly exposing the grid to corrosion.

Further, increased contact area between the active material and the battery grid can decrease the interface resistance, thereby increasing the utilization of the active material, the battery output, and the overall battery performance. Poor contact or minimal contact between the active material and the battery grid can increase the interface resistance thereby decreasing the utilization of the active material and decreasing the battery output.

Grid wires that have a non-planar surface can have more surface area than battery grid wires, of equal cross-sectional area, with only sloped or angled surfaces. The battery grid described herein can promote adhesion between the active material and the battery grid to increase battery performance and decrease the chances of the active material shearing away from the grid.

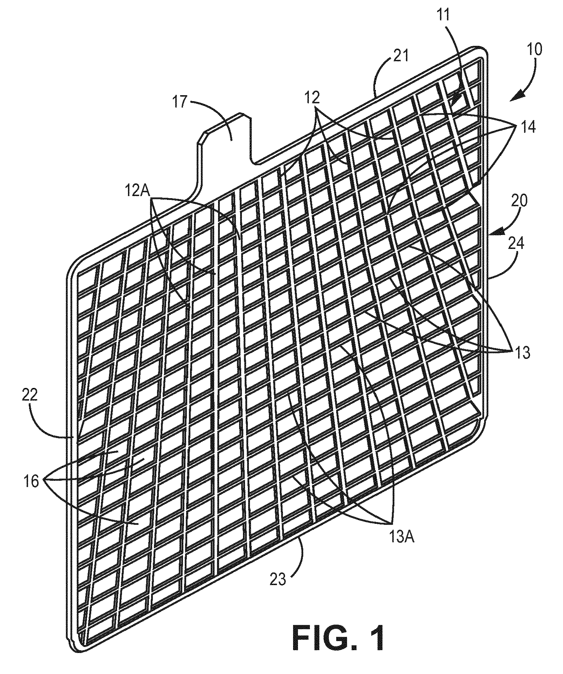

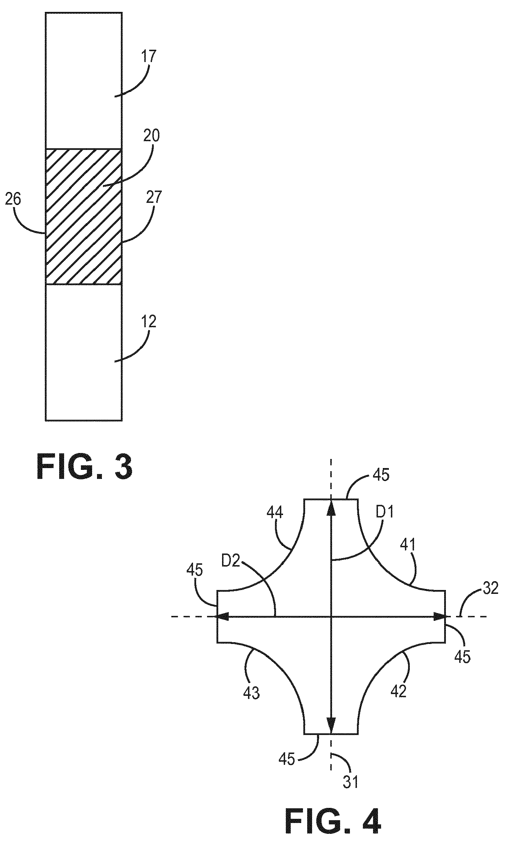

FIGS. 1-2 illustrate a battery grid that includes wire elements and FIGS. 4-12 illustrate cross-sections of wire elements according to various embodiments. The cross-sections as described herein can reference a cross-section of a wire element that can be perpendicular to an axis along the wire element's length or longitudinal axis. Each of these embodiments will now be discussed in detail.

FIG. 1 is an isometric view of the grid 10 for a battery. The grid 10 has a grid wire network 11 composed of a plurality of generally vertically extending grid wires 12, which in turn is composed of grid wire elements 12A, and a plurality of generally horizontally extending grid wires 13, which in turn is composed of grid wire elements 13A joined to the vertical grid wire elements 12A at a plurality of separate nodes 14 to define a plurality of open spaces 16. In some embodiments, each node 14 can include at least one generally horizontally extending grid wire 13 and at least one generally vertically extending grid wire 12. In some embodiments, each node 14 can include at least two generally horizontally extending grid wires 13 and at least two generally vertically extending grid wires 12. In some embodiments, a node 14 can include two generally vertically extending grid wires 12 and one generally horizontally extending wire 13. In some embodiments, a node 14 can include one generally vertically extending grid wire 12 and two generally horizontally extending grid wires 13. In various embodiments, the grid 10 and/or the wires 12, 13 can include lead alloy. The generally vertically extending grid wires 12 can be generally vertical, such that the wires 12 extend within +45° from vertical or -45° from vertical. The generally vertically extending wires 12 can be generally vertical, such that the wires 12 extend within a 45 degree angle from a vertical axis, where a vertical axis can be a line parallel to frame elements 22 or 24, or parallel to an axis perpendicular to frame elements 21 or 23. In some embodiments, the generally vertically extending gird wires 12 can extend within +40° from vertical or -40° from vertical. In some embodiments, the generally vertically extending gird wires 12 can extend within +35° from vertical or -35° from vertical. The generally horizontally extending wires 13 can be generally horizontal, such that the wires 13 extend within a 45 degree angle from a horizontal axis, where a horizontal axis can be a line parallel to frame elements 21 or 23, or parallel to an axis perpendicular to frame elements 22 or 24. The generally horizontally extending grid wires 13 can be generally horizontal, such that the wires 13 extend within +45° from horizontal or -45° from horizontal. In some embodiments, the generally horizontally extending grid wires 13 can extend within +40° from horizontal or -40° from horizontal. In some embodiments, the generally horizontally extending grid wires 13 can extend within +35° from horizontal or -35° from horizontal.

The vertically extending wires 12 and the horizontally extending wires 13 may be bordered by a frame 20 composed of frame elements 21, 22, 23 and 24. In some embodiments, some of the vertically extending grid wires 12 are joined at opposite ends to horizontal frame elements 21 and 23. In some embodiments, the horizontally extending grid wires 13 may be joined at opposite ends to vertical frame elements 22 and 24. In some embodiments, horizontally extending grid wires 13 may be joined at one end to the vertical frame elements 22, 24 and at the opposite ends to horizontal frame elements 21, 23.

In various embodiments, the vertically extending grid wires 12 and the horizontally extending grid wires 13 can have a similar cross-section, for example, they have similar shape and/or similar area. Two wires that have a similar shape can have the same perimeter shape, but have a different size that results in a different area. In some embodiments, the wires 12, 13 have uniform cross-sections along their lengths, such that the wires 12, 13 have a constant shape and/or area. In some embodiments, the width and cross-sectional area of the vertically extending wires 12 varies. In other words, the vertically extending grid wires 12 can be tapered from a small cross-sectional area near the bottom frame element 23 to a larger cross-sectional area near the top frame element 21.

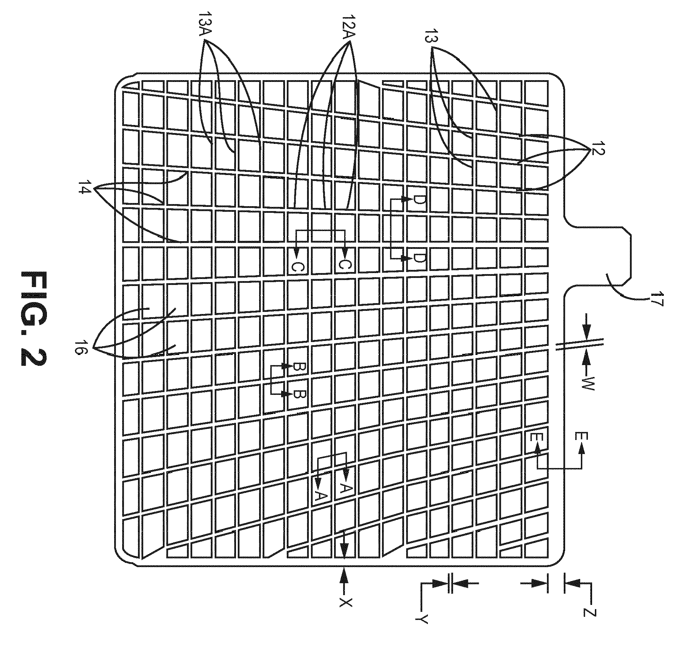

FIG. 2 shows the front view of a grid. The vertical frame elements 22 and 24 of the frame 20 can have a lateral width "X" that is greater than the lateral width "Y" of at least one of the horizontally extending grid wires 12. The lateral width "W" of the upper ends of the vertically extending grid wires 12 is in some embodiments less than the lateral width "Z" of the frame element 21 but can be equal to or greater than the lateral width "Z" of the frame element 21. A current collector lug 17 extends upwardly from the frame element 21. The current collector lug 17 can be generally rectangular. For example, the connect lug can have a rectangular shape with rounded corners. In various embodiments, the current collector lug 17 is longer in the vertical directions than the horizontal directions, where the vertical direction is defined by the vertical frame elements 22 and 24, and the horizontal direction is defined by the horizontal frame elements 21 and 23.

FIG. 3 shows a cross-section of the frame 20 of the grid 10, according to an embodiment. The cross-section shown in FIG. 3 can be a cross-section along line E-E in FIG. 2. FIG. 3 also shows a vertical grid wire 12 intersecting the frame 20 and the lug 17 intersecting the frame 20. In various embodiments, the frame 20 can have two planar surfaces 26, 27. The planar surfaces 26, 27 can be parallel.

FIGS. 4-12 show cross-sections of wire elements according to various embodiments. The cross-sections shown in FIGS. 4-12 can be cross-sections of horizontal grid wires 13, such as along line A-A in FIG. 2. The cross-sections shown in FIGS. 4-12 can be cross-sections of vertical grid wires 12, such as along line B-B in FIG. 2. The cross-section shown in FIGS. 4-12 can represent vertical grid wires 12 or horizontal grid wires 13. In various embodiments, the grid 10 can include vertical grid wires 12 and horizontal grid wires 13 that all have similar cross-sections. In some embodiments, the majority of the grid wires 12, 13 have similar cross-sections. In some embodiments, all of the grid wires 12, 13 have similar cross-sections.

In various embodiments, a grid wire 12, 13 can have a cross-section as shown in FIGS. 4-12 at one point along the length of a grid wire 12, 13 as the grid wire 12, 13 extends between two adjacent nodes 14. In various embodiments, a grid wire 12, 13 can have a cross-section as shown in FIGS. 4-12 at one point along the length of a grid wire 12, 13 as the grid wire 12, 13 extends between two opposite frame elements, such as a vertical grid wire 12 extending between frame element 21 and frame element 23, or a horizontal grid wire 13 extending between frame element 22 and frame element 24.

In various embodiments, the cross-sections of grid wires shown in FIGS. 4-12 can be representative of a standard cross-section of the wire, such that the cross-section is substantially the same along a length of the wire. The cross-section can be substantially the same in that the cross-section can have the same shape allowing for differences as a result of the manufacturing process. In some embodiments, the grid wire can have a cross-section that is substantially the same in that the cross-section can have the same shape and same size allowing for differences as a result of the manufacturing process. In some embodiments, the shape can remain constant and the size can vary, such as a wire that is tapered from one end to the other.

In some embodiments, a grid wire 12, 13 can have a substantially similar cross-section along at least 5% of the grid wire's length between two adjacent nodes 14. In some embodiments, a grid wire 12, 13 can have a substantially similar cross-section along at least 10% of the grid wire's length between two adjacent nodes 14. In some embodiments, a grid wire 12, 13 can have a substantially similar cross-section along at least 25% of the grid wire's length between two adjacent nodes 14. In some embodiments, a grid wire 12, 13 can have a substantially similar cross-section along at least 50% of the grid wire's length between two adjacent nodes 14. In some embodiments, a grid wire 12, 13 can have a substantially similar cross-section along at least 75% of the grid wire's length between two adjacent nodes 14. In some embodiments, a grid wire 12, 13 can have a substantially similar cross-section along at least 90% of the grid wire's length between two adjacent nodes 14. In some embodiments, a grid wire 12, 13 can have a substantially similar cross-section along at least 95% of the grid wire's length between two adjacent nodes 14.

Some grid wires have a length that extends from frame element 21 to frame element 23. Some grid wires have a length that extends from frame element 21 to frame element 22. Some grid wires have a length that extends from frame element 21 to frame element 24. Some grid wires have a length that extends from frame element 22 to frame element 24.

In some embodiments, a grid wire 12, 13 can have a substantially similar cross-section along at least 5% of the grid wire's length between two frame elements 21, 22, 23, 24. In some embodiments, a grid wire 12, 13 can have a substantially similar cross-section along at least 10% of the grid wire's length between two frame elements 21, 22, 23, 24. In some embodiments, a grid wire 12, 13 can have a substantially similar cross-section along at least 25% of the grid wire's length between two frame elements 21, 22, 23, 24. In some embodiments, a grid wire 12, 13 can have a substantially similar cross-section along at least 50% of the grid wire's length between two frame elements 21, 22, 23, 24. In some embodiments, a grid wire 12, 13 can have a substantially similar cross-section along at least 75% of the grid wire's length between two frame elements 21, 22, 23, 24. In some embodiments, a grid wire 12, 13 can have a substantially similar cross-section along at least 90% of the grid wire's length between two frame elements 21, 22, 23, 24. In some embodiments, a grid wire 12, 13 can have a substantially similar cross-section along at least 95% of the grid wire's length between two frame elements 21, 22, 23, 24.

In some embodiments, the substantially similar cross-section can extend along the grid wire's length consecutively. For example, if a grid wire has a substantially similar cross-section extending along 25% of the grid wire's length between two nodes or frame elements, the 25% of the wire with a similar cross-section can be next to each other or unseparated by sections of the wire that have a non-similar cross-section. In alternative embodiments, the substantially similar cross-section can extend along several separate segments of the wire's length. For example, if a grid wire has a substantially similar cross-section extending along 25% of the grid wire's length between two nodes or frame elements, a first portion with the similar cross-section can be separated from a second portion with the similar cross-section by a portion that has a different cross-section, as long as, in total, 25% of the grid wire's length has the substantially similar cross-section.

As used herein a "surface" of a cross-section can refer to the edge or perimeter of the cross-section which relates to an outer surface of the grid wire 12, 13. The cross-section of the grid wires 12, 13 can include at least one non-planar surface. A non-planar surface can be curved or non-linear. In various embodiments, the non-planar surface can be non-circular, such that the surface does not define a complete circle. In some embodiments, a surface includes at least 1% of the perimeter of the cross-section. In some embodiments, a surface includes at least 5% of the perimeter of the cross-section. In some embodiments, a surface includes at least 10% of the perimeter of the cross-section.

In various embodiments, a non-planar surface can include a concave surface or at least a portion of the non-planar surface can be concave. A surface can be concave such as curving inward, such as the interior of a circle, sphere, or oval. A concave surface can be curved like a segment of the interior of a circle or a hollow sphere.

In various embodiments, a non-planar surface can include a convex surface or at least a portion of the non-planar surface can be convex. A surface can be convex such as curving outward, such as the exterior of a circle or sphere. A convex surface can be curved like a segment of the exterior of a circle or a sphere.

In some embodiments, a non-planar surface can include a convex portion and a concave portion, such as a portion that is curved inward and a portion that is curved outward. In some embodiments, a cross-section of a wire 12, 13 does not include any planar surfaces.

In some embodiments, the open spaces 16 can be bordered by or partially defined by non-planar surfaces of the wires 12, 13. In an embodiment, the open spaces 16 are completely bordered by or partially defined by non-planar surfaces of the wires 12, 13. In an embodiment, the open spaces 16 are bordered by or partially defined by concave surfaces. In an embodiment, the open spaces 16 are bordered by or partially defined by convex surfaces. In an embodiment, the open spaces 16 are bordered by or partially defined by concave and convex surfaces.

FIG. 4 shows a cross-section of a wire, according to an embodiment. The cross-section can include a first axis 31 and a second axis 32. In various embodiments, the first axis 31 can be generally perpendicular to the second axis 32. In various embodiments, the first axis 31 can be perpendicular to a front plane or face of the battery grid and the second axis 32 can be parallel with a front plane or face of the battery grid.

In various embodiments, the cross-section can include a first concave surface 41, a second concave surface 42, a third concave surface 43 and a fourth concave surface 44. In an embodiment, the first concave surface 41 can be located on the opposite side of the first axis 31 from the fourth concave surface 44. In an embodiment, the first concave surface 41 can be located on the opposite side of the second axis 32 from the second concave surface 42. In an embodiment, the second concave surface 42 can be located on the opposite side of the first axis 31 from the third concave surface 43. In an embodiment, the third concave surface 43 can be located on the opposite side of the second axis 32 from the fourth concave surface 44.

In various embodiments, the radius of curvature of the concave surfaces 41, 42, 43, 44 can range from .005 inch to .500 inch. The radius of curvature of a non-planar surface is the radius of a circle that touches the non-planar surface at a given point and has the same tangent and curvature at that point. A smaller radius of curvature can result in a concave surface being more curved compared to a concave surface with a larger radius of curvature. The curvature of the non-planar surface can be accomplished by pressing or stamping processes acting on the wire. The curvature of the non-planar surface can also be created by cutting away or removing material from the wire.

The first axis 31 and the second axis 32 can define four quadrants, such that a quadrant can be partially defined by a portion of the first axis 31 and a portion of the second axis 32. In various embodiments, a concave surface can be located in each quadrant, such as shown in FIG. 4. In an embodiment, at least three quadrants include a concave surface. In an embodiment, at least two quadrants include a concave surface.

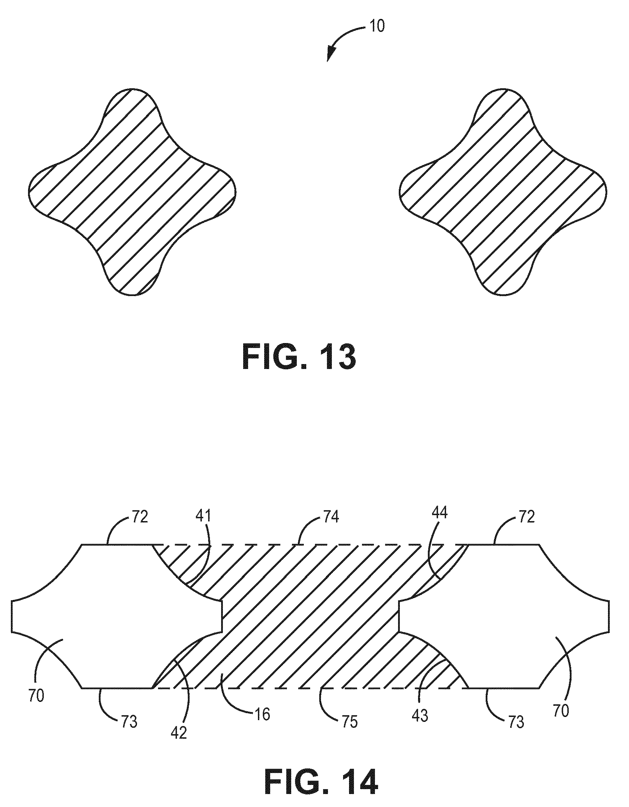

FIG. 4 shows dimension D1 and dimension D2. Dimension D1 can refer to the distance along the first axis 31 from the connection between the first concave surface 41 and the fourth concave surface 44 to the connection between the second concave surface 42 and the third concave surface 43. Dimension D2 can refer to the distance along the second axis 32 from the connection between the first concave surface 41 and the second concave surface 42 to the connection between the third concave surface 43 and the fourth concave surface 44. In some embodiments, D1 and D2 can be equal, such as shown in FIG. 4. In some embodiments, D1 can be larger than D2, and in other embodiments D2 can be larger than D1 (as shown in FIG. 14).

In an embodiment, the first concave surface 41 and the second concave surface 42 are mirror images of each other across the second axis 32. In an embodiment, the third concave surface 43 and the fourth concave surface 44 are mirror images of each other across the second axis 32. In an embodiment, the second concave surface 42 and the third concave surface 43 are mirror images of each other across the first axis 31. In an embodiment, the first concave surface 41 and the fourth concave surface 44 are mirror images of each other across the first axis 31.

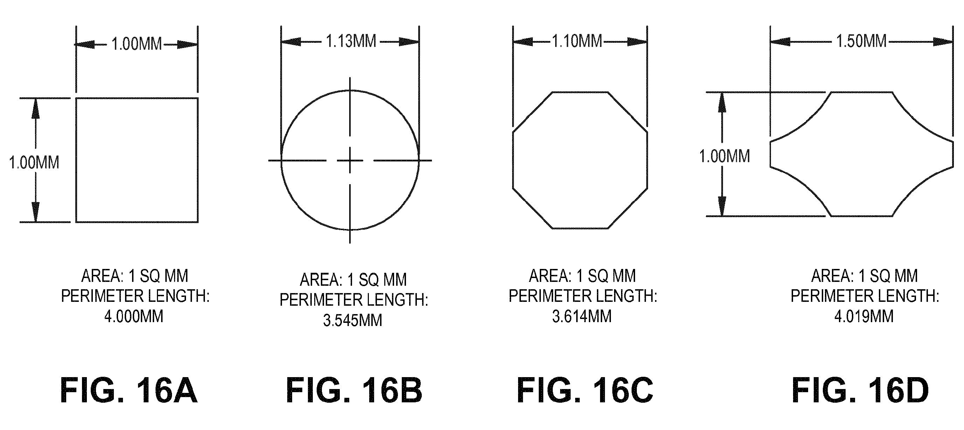

FIG. 16 shows a side-by-side comparison of four example wire shape cross-sections with identical cross-sectional areas of 1 millimeter square (mm²), but with different perimeter shapes and perimeter lengths, illustrating how including non-planar surfaces in a wire cross-section shape can increase the wire's surface area available for interaction with an active material compared to a wire cross-section shape with only planar surfaces. For example, a square wire cross-section shape of FIG. 16A has four planar sides each measuring 1 millimeter (mm) and has no non-planar sides. The square wire cross-section shape of FIG. 16A has a cross-sectional area of 1 mm² and a perimeter length of 4 mm. For the square wire cross-section shape, the ratio of perimeter length to cross-section area is 4:1.

A circular wire cross-section shape of FIG. 16B with an identical cross-sectional area of 1 mm² has a diameter of 1.13 mm and a perimeter length of 3.545 mm. For the circular wire cross-section shape, the ratio of perimeter length to cross-section area is 3.545:1.

Increasing the number of planar sides of the wire cross-section shape can provide additional surfaces for active material to rest but may shorten the perimeter length, as illustrated by the octagonal wire cross-section shape of FIG. 16C and a comparison to the square wire cross-section shape of FIG. 16A. The octagonal wire cross-section shape has eight planar sides, where six sides are non-vertical, and has no non-planar sides. The octagonal wire cross-section shape has a width of 1.10 mm, a cross-sectional area of 1 mm² and a perimeter length of 3.614 mm, which is shorter than the perimeter length of 4 mm for the square wire cross-section shape of the same cross-sectional area. For the octagonal wire cross-section shape, the ratio of perimeter length to cross-section area is 3.6:1.

Using one or more non-planar sides instead of planar sides in the wire cross-section shape can increase the perimeter length, as illustrated by the diamond-like wire cross-section shape 1606, which includes four non-planar, concave sides. The diamond-like wire cross-section shape of FIG. 16D has a cross-sectional area of 1 mm² and a perimeter length of 4.019 mm. For the diamond-like wire cross-section shape, the ratio of perimeter length to cross-section area is 4.019:1.

As illustrated in FIG. 16, in various embodiments, the cross-section of a wire element that includes a non-planar surface can have a longer perimeter length relative to a similar cross-section with only planar surfaces. A longer perimeter length of the cross-section results in the wire element having more surface area available to interact with the active material. Two, three, four or more non-planar surfaces can further increase the surface area compared to a similar cross-section with only planar surfaces. The increased surface area of the wire element can result in more contact between the wire elements and the active material.

In some embodiments, the ratio between perimeter length and cross-sectional area can be at least 4:1. In one example, the perimeter length can be 4 units or more and the area can be 1 unit² or less. In additional embodiments, the ratio of perimeter to cross-sectional area can be at least 3.5:1, 3.6:1, 4.01:1, 4.02:1 or 4.5:1. In various embodiments, the non-planar surface(s) can increase surface area by at least 3%, 4%, 5%, or 10% when compared to a wire cross section of similar shape and cross-sectional area, but with all planar surfaces.

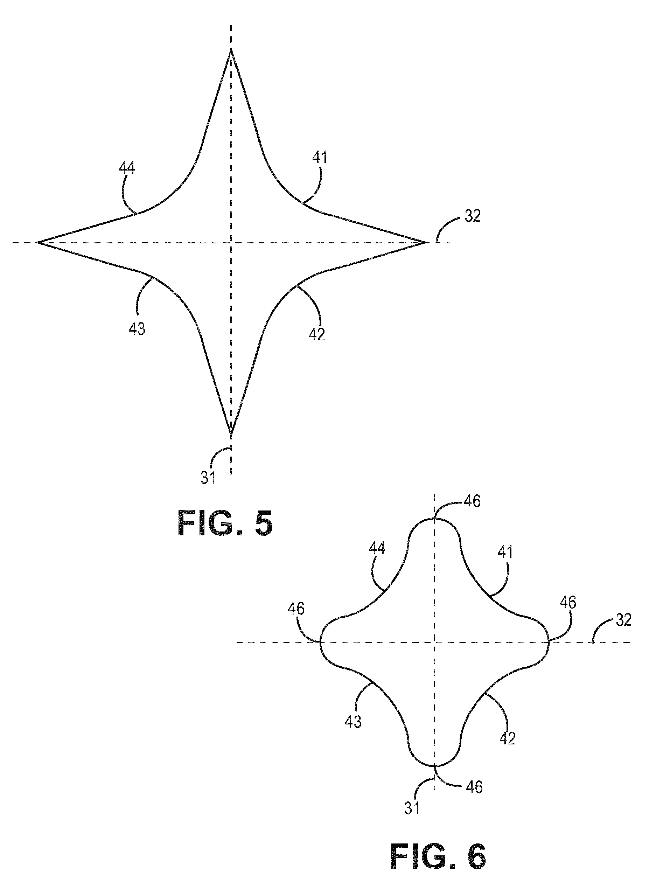

In some embodiments, a planar surface 45 can join or be positioned between two of the non-planar surfaces. In an embodiment, a cross-section can include four planar surfaces 45 joining the non-planar surfaces. In some embodiments, the concave surfaces 41, 42, 43, 44 can join each other at a point, such as shown in FIG. 5. The ends of the surfaces 41, 42, 43, 44 can include a linear or flat portion that can be angled to connect with an adjacent surface, such as at a point. The angle at which two surfaces connect can vary. A larger angle can result in a shorter D1 or D2 distance. A smaller angle can result in a larger D1 or D2 distance.

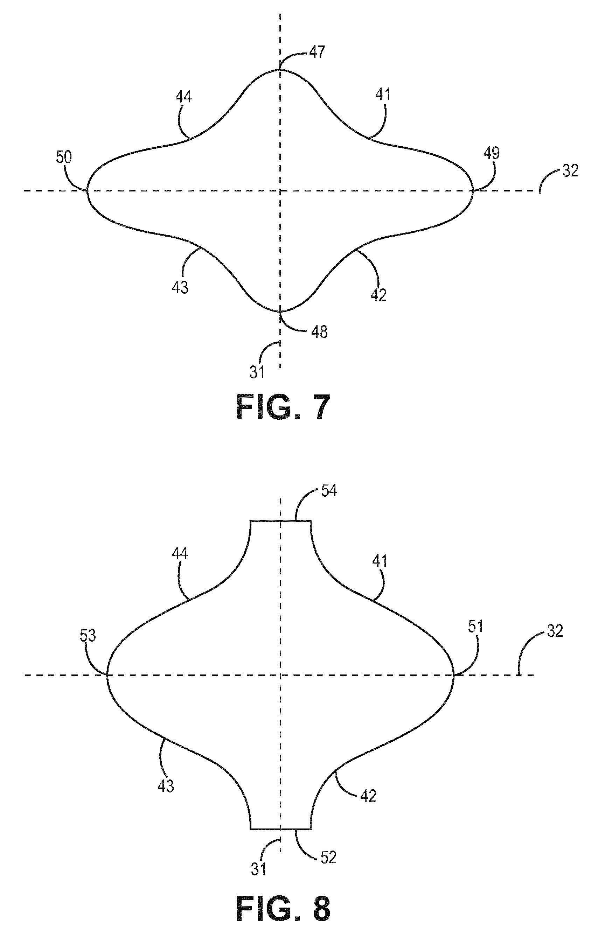

In some embodiments, the concave surfaces 41, 42, 43, 44 can join each other at a convex surface 46, such as shown in FIGS. 6 and 7.

In some embodiments, the cross-section of a wire 12, 13 includes one or more concave surfaces, one or more convex surfaces, and one or more planar surfaces. FIG. 8 shows an example cross-section where the first concave surface 41 joins the second concave surface 42 with a convex surface 51, the second concave surface 42 joins the third concave surface 43 with a planar surface 52, the third concave surface 43 joins the fourth concave surface 44 with a convex surface 53, and the fourth concave surface 44 joins the first concave surface 41 with a planar surface 54. The example of FIG. 8 includes, four concave surfaces, two planar surfaces and two convex surfaces.

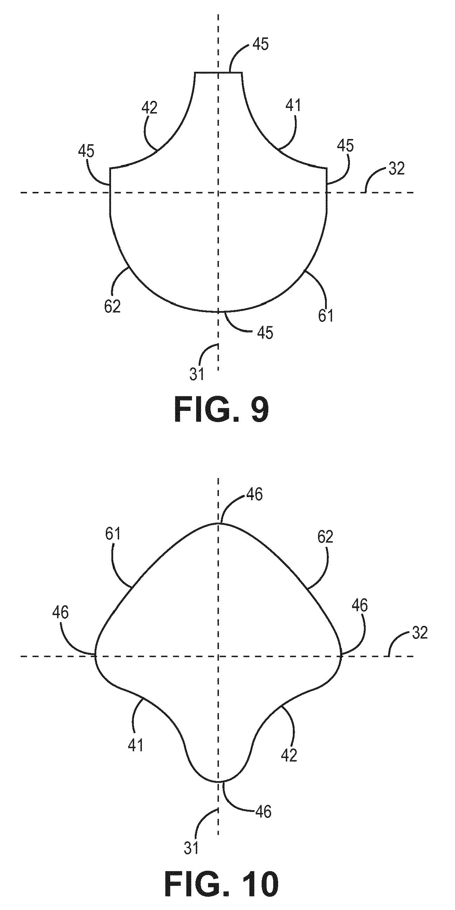

FIG. 9 is a cross-section of a wire 12, 13, according to an embodiment. The cross-section can include a first axis 31 and a second axis 32. The first axis 31 can be perpendicular to the second axis 32.

The cross-section of FIG. 9 includes a first concave surface 41, a second concave surface 42, a first convex surface 61, and a second convex surface 62.The first concave surface 41 and the second concave surface 42 can be on the same side of the second axis 32 as each other. The first convex surface 61 and the second convex surface 62 can be on the same side of the second axis 32 as each other. The first concave surface 41 and the second concave surface 42 can be on the opposite side of the second axis 32 from the first convex surface 61 and the second convex surface 62. The first concave surface 41 and the second concave surface 42 can be mirror images of each other across the first axis 31. The first convex surface 61 and the second convex surface 62 can be mirror images of each other across the first axis 31.

In an embodiment, the first concave surface 41 can join the first convex surface 61 at a planar surface 45. In an embodiment, the first concave surface 41 can join the second concave surface 42 at a planar surface 45. In an embodiment, the first convex surface 61 can join the second convex surface 62 at a planar surface 45. In an embodiment, the second concave surface 42 can join the second convex surface 62 at a planar surface 45.

In an embodiment shown in FIG. 10, the first concave surface 41 can join the first convex surface 61 at a convex surface 46. In an embodiment, the first concave surface 41 can join the second concave surface 42 at a convex surface 46. In an embodiment, the first convex surface 61 can join the second convex surface 62 at a convex surface 46. In an embodiment, the second concave surface 42 can join the second convex surface 62 at a convex surface 46.

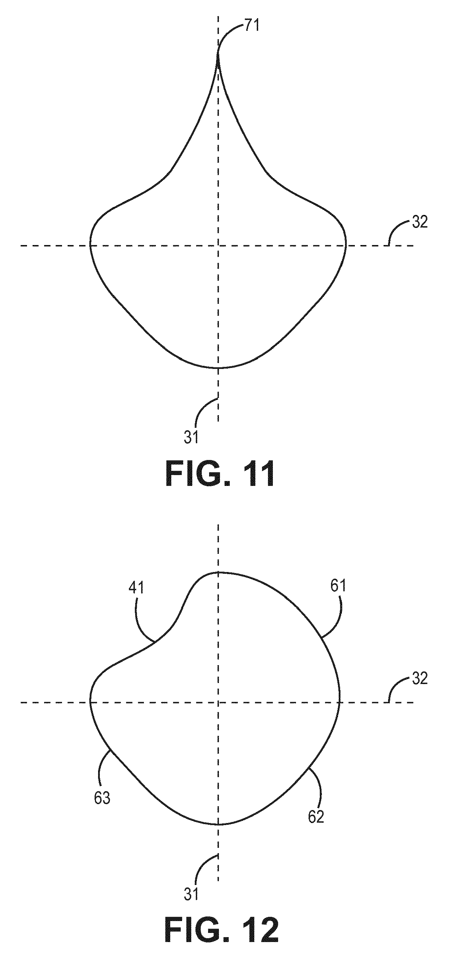

As shown in FIG. 11, in an embodiment, the first concave surface 41 can join the second concave surface 42 at a point 71. In various embodiments, the cross-section can have a shape generally similar to a tear drop, such as a tear drop with an angled point, as shown in FIG. 11. The cross-section shown in FIG. 11 can be similar to the cross-section of FIG. 10, with an angled or pointed portion.

FIG. 12 shows a cross-section of a wire 12, 13, according to an embodiment. In an embodiment, the cross-section can include a first convex surface 61, a second convex surface 62, a third convex surface 63, and a first concave surface 41. In some embodiments, the cross-section can include one line of symmetry. In other embodiments, the cross-section may not have any lines of symmetry.

FIG. 13 shows a cross-section of a portion of a grid 10, according to an embodiment. The cross-section shown in FIG. 13 can be a cross-section of horizontal grid wires 13, such as along line C-C in FIG. 2. The cross-section shown in FIG. 13 can be a cross-section of vertical grid wires 12, such as along line D-D in FIG. 2. The cross-section shown in FIG. 13 can represent vertical grid wires 12 or horizontal grid wires 13.

FIG. 14 shows a cross-section of a portion of a grid 10, according to an embodiment. The cross-section shown in FIG. 14 can be a cross-section of horizontal grid wires 13, such as along line C-C in FIG. 2. The cross-section shown in FIG. 14 can be a cross-section of vertical grid wires 12, such as along line D-D in FIG. 2. The cross-section shown in FIG. 14 can represent vertical grid wires 12 or horizontal grid wires 13.

As discussed above in regards to FIG. 1, the various vertical grid wires 12 and horizontal grid wires 13 can define open spaces 16, also shown in FIG. 14. The open spaces 16 can be at least partially defined by a non-planar surface of the wires. Various open spaces 16 are at least partially defined by two adjacent vertical grid wires 12 and two adjacent horizontal grid wires 13.

FIG. 14 shows two adjacent wires 70. The wires 70 can be representative of vertical grid wires 12 or horizontal grid wires 13. The wires 70 can include a front surface 72 and a back surface 73. A front plane 74 of the grid can be defined by the front surfaces 72 of the wires 70. A back plane 75 of the grid can be defined by the back surfaces 73 of the wires 70. In various embodiments, a front surface 72 or back surface 73 can be a point, such as when a cross-section has an angled connection, such as shown in FIG. 5. The open spaces 16 can extend from the front plane 74 to the back plane 75, such as represented by the shaded region in FIG. 14. In some embodiments, a grid can include multiple front planes 74 and multiple back planes 75, such as when the wires include kinks, bends or undulations as shown in U.S. Patent Application No. 13/602,630 filed on September 4, 2012. The open spaces 16 can be defined between any one of the front planes 74 and anyone of the back planes 75. The open spaces 16 can refer to the open area, area not occupied by a horizontal grid wire 13 or a vertical grid wire 12, between the front plane 74 and the back plane 75. The open spaces 16 can extend from one horizontal grid wire 13 to an adjacent horizontal grid wire 13 and across from one vertical grid wire 12 to an adjacent vertical grid wire 12. In various embodiments, an open space 16 can be at least partially defined by a non-planar surface of a horizontal grid wire 13 or a vertical grid wire 12. In some embodiments, the non-planar surface of the horizontal grid wire 13 or the vertical grid wire 12 can be concave. In some embodiments, the non-planar surface of the horizontal grid wire 13 or the vertical grid wire 12 can be convex. In some embodiments, the open space 16 can be at least partially defined by at least one concave surface and at least one convex surface.

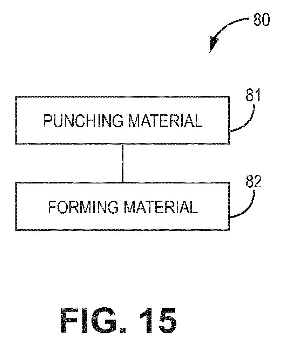

FIG. 15 shows a flow chart depicting a method 80 of making a grid, according to an embodiment. In an embodiment, the method 80 can include punching material out of a strip of material to form a grid network bordered by at least one frame element, step 81. In various embodiments, the frame element can include a current collector lug.

The method 80 can further include forming the plurality of wires of the grid with a die to change the cross-sectional shape of the wires, step 82. In a forming step, the wire cross-section can be changed or deformed. The forming step can include the use of a coin or a die that deforms the shape of the wire. The cross-section of a wire after forming can be non-circular and can include at least one non-planar surface. In some embodiments, the cross-section of the wire after forming can include at least one concave surface. In some embodiments, the cross-section of the wire after forming can include at least one convex surface and at least one concave surface. In some embodiments, the cross-section of the wire after forming does not include any planar surfaces. In various embodiments, forming the plurality of wires can include stamping the wires to change the shape of the wire's cross-section.

In some embodiments, the method 80 can further include forming a controlled surface roughness on the at least one non-planar surface to promote adhesion to the non-planar surface of the wire of a subsequently applied and cured battery paste (the active material). In some embodiments, the controlled surface roughness can have a size of about 10 micro inches Ra to about 1000 micro inches Ra.

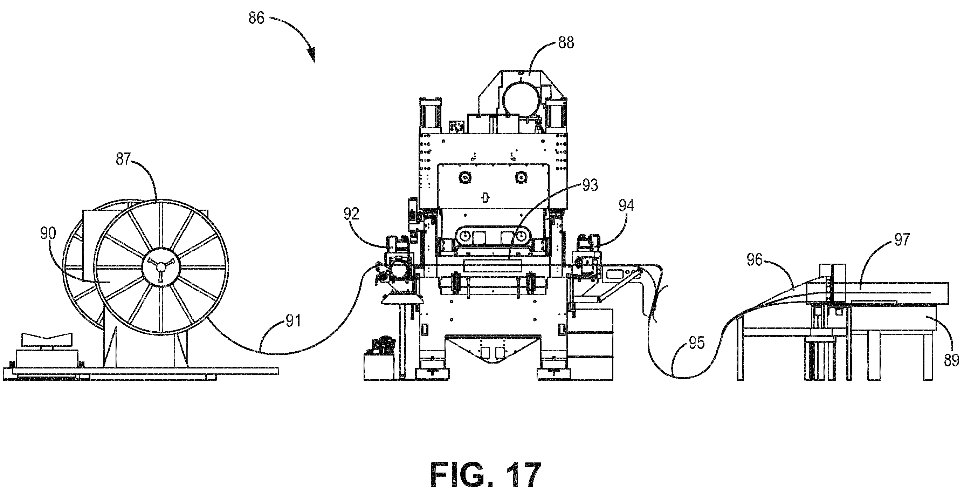

FIG. 17 is a schematic of a forming system 86, according to an embodiment. In an embodiment, the forming system 86 can include a battery grid punching system that can be configured to produce battery grids, such as the battery grids described herein. The system 86 can take raw material, such as a lead strip, from a bobbin or other input feed system. The raw material can travel into a forming component, such as a punching press, to produce a battery grid from the raw material. After the battery grid is formed, the battery grid can be recoiled for storage or transportation. The system 86 can include decoiler 87, a punching press 88 (or another forming component), and a recoiler 89.

The decoiler 87 can remove the unformed raw material from a lead strip bobbin 90. The lead strip bobbin 90 can hold or store a lead strip 91 that will be formed into a plurality of battery grids. The lead strip 91 can be transferred from the decoiler 87 to the punching press 88 by an input feeder 92, such as a servo feeder. The input feeder 92 can supply the punching press with the lead strip 91. The punching press 88 can form the lead strip 91 into a battery grid, such as by stamping the lead strip 91.

The punching press 88 can include a forming tool 93. The punching and forming tool 93 can be used to punch the grid network of wires and form the wires from the lead strip 91. In various embodiments, the forming tool 93 can include multiple die portions and a lifting mechanism, as will be discussed below. The formed material 95 can be pulled from the punching press by an output feeder 94, such as a servo feeder. The output feeder can remove the strip formed material 95 from the punching press 88 and supply the strip of formed material 95 to the recoiler 89.

In various embodiments, the system 86 can include a transition element 96 between the output feeder and the recoiler 89. The transition element 96 can be configured to change the orientation of the formed material 95, such as from a horizontal plane to a vertical plane. Once the formed material 95 is orientated as desired, the recoiler 89 can recoil the strip of formed material 95 on to spools 97.

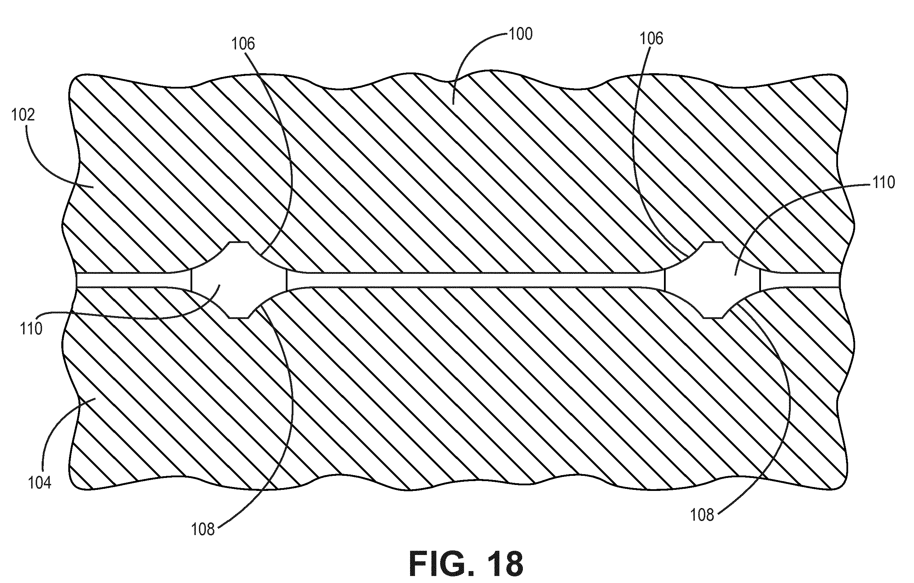

FIG. 18 is a cross-section of a forming tool 100, according to an embodiment. The forming tool 100 can include a first die portion 102 and a second die portion 104. The first die portion 102 and the second die portion 104 can be pressed together with a grid wire element 110 between the two portions 102, 104 to form or change the shape of the grid wire elements 110.

The first die portion 102 and the second die portion 104 can define a channel 108. When a grid wire element 110 is disposed within the channel 108 and the first portion 102 is compressed together with the second die portion 104, the grid wire element 110 can be formed to have a similar shape as the channel 108, or an opposite or mirrored shape from the portions 102, 104 that define the channel 108. Those of ordinary skill in the art will understand that the grid wire element 110 can be formed to have a similar shape as the channel 108, but possibly not identical based on manufacturing tolerances. The portions 102, 104 that define the channel 108 can define the shape of the grid wire element 110, as such the portions 102, 104 will have an inverse or opposite shape from the grid wire element 110. In various embodiments, a cross-section of the channel 108 can include one or more convex surfaces 106. A convex surface defining a portion of the channel 108 can result in a cross-section of the grid wire element having a concave surface, such as described herein. A person of ordinary skill in the art will recognize that the shape of the channel 108 can directly influence the shape of the grid wire. As such, the shape of the channel 108 can be modified to result in the various embodiments of the grid wires described herein.

As discussed above, some embodiments of forming the grid wires includes forming a controlled surface roughness. The surface roughness can be controlled by the surfaces of the die portions 102, 104 that form the material.

In various embodiments, the forming tool 100 can include a lifting mechanism. The lifting mechanism can include one or more lifting bars. The lifting bars can be spring biased above a surface of a die portion 102, 104 that faces the other die portion 102, 104. In an embodiment, when the first die portion 102 and the second die portion 104 are separated or not engaging each other, the lifting bar can be located above the surface of the die portion 102, 104 it is located on. When forming the grid wire, the first die portion 102 and the second die portion 104 can be pressed together to depress the lifting bar behind the surface on the die portion 102, 104 it is located on. When the first die portion 102 is separated from the second die portion 104, the spring biasing the lifting bar can raise the lifting bar. The raising of the lifting bar can lift the grid out of the channel defined by the die portion 102, 104, such as to facilitate separation of the grid from the die portion 102, 104 after forming. In an embodiment, a die portion 102, 104 can include a lifting bar along the sections of the die portion 102, 104 that correspond with the frame elements.

It should be noted that, as used in this specification and the appended claims, the singular forms "a," "an," and "the" include plural referents unless the content clearly dictates otherwise. Thus, for example, reference to a composition containing "a compound" includes a mixture of two or more compounds. It should also be noted that the term "or" is generally employed in its sense including "and/or" unless the content clearly dictates otherwise.

It should also be noted that, as used in this specification and the appended claims, the phrase "configured" describes a system, apparatus, or other structure that is constructed or configured to perform a particular task or adopt a particular configuration to. The phrase "configured" can be used interchangeably with other similar phrases such as arranged and configured, constructed and arranged, constructed, manufactured and arranged, and the like.

All publications and patent applications in this specification are indicative of the level of ordinary skill in the art to which this technology pertains. All publications and patent applications are herein incorporated by reference to the same extent as if each individual publication or patent application was specifically and individually indicated by reference.

The technology has been described with reference to various specific and preferred embodiments and techniques. However, it should be understood that many variations and modifications may be made while remaining within the spirit and scope of the technology.

Aspects of the invention may include any of the following.
1. A method of making a grid for a battery, comprising:
   punching material out of a strip of material to form a grid network of a plurality of wires bordered by at least one frame element having a current collector lug;
   forming the plurality of wires of the grid with a die to change the cross-sectional shape of the wires, wherein a cross-section of one of the plurality of wires after forming comprises at least one concave surface.
2. The method of making a grid for a battery of aspect 1, wherein the cross-section comprises at least two concave surfaces.
3. The method of making a grid for a battery of aspect 1, wherein the cross-section comprises at least one planar surface.
4. The method of making a grid for a battery of aspect 1, wherein the cross-section comprises at least one convex surface.
5. The method of making a grid for a battery of aspect 1, wherein the cross-section does not include any planar surfaces.
6. The method of making a grid for a battery of aspect 1, wherein the material comprises lead alloy.
7. The method of making a grid for a battery of aspect 1, further comprising:
   forming a controlled surface roughness having a size of about 10 micro inches Ra to 1000 micro inches Ra on the at least one concave surface to promote adhesion to the concave surface of the wire of a subsequently applied and cured battery paste.
8. The grid for a battery of aspect 1, wherein the cross-section has a perimeter length and a cross-sectional area, wherein a ratio between the perimeter length and the cross-sectional area is at least 4.01:1.
9. A grid for a battery, comprising:
   a grid network bordered by at least one frame element having a current collector lug;
   the grid network comprising a plurality of spaced apart generally vertically extending and generally horizontally extending grid wire elements, each grid wire element having opposed ends, each opposed end being joined to one of a plurality of nodes to define a plurality of open spaces, selected ones of the grid wire elements being joined at one of their ends to the one or more frame elements, wherein the wire elements have a cross-section that comprises at least one concave surface.
10. The grid for a battery of aspect 9, wherein the cross-section comprises a first axis, a second axis, a first concave surface, a second concave surface, a third concave surface and a fourth concave surface;
   wherein the first axis is perpendicular to the second axis;
   wherein the first concave surface and the second concave surface are mirror images of each other across the first axis, the third concave surface and the fourth concave surface are mirror images of each other across the first axis, the second concave surface and the third concave surface are mirror images of each other across the second axis, and the first concave surface and the fourth concave surface are mirror images of each other across the second axis.
11. The grid for a battery of aspect 9, wherein the cross-section comprises a first axis, a second axis, a first concave surface, a second concave surface, a first convex surface and a second convex surface;
   wherein the first axis is perpendicular to the second axis;
   wherein the first concave surface and the second concave surface are on the same side of the first axis as each other, the first convex surface and the second convex surface are on the same side of the first axis as each other, and the first concave surface and the second concave surface are on the opposite side of the first axis as the first convex surface and the second convex surface;
   wherein the first concave surface and the second concave surface are mirror images of each other across the second axis, the first convex surface and the second convex surface are mirror images of each other across the second axis.
12. The grid for a battery of aspect 9, comprising a plurality of nodes, wherein each node comprises the connection of at least two vertically extending wire elements and at least two horizontally extending wire elements.
13. The grid for a battery of aspect 9, wherein the cross-section comprises at least two concave surfaces.
14. The grid for a battery of aspect 9, wherein the cross-section comprises at least one planar surface.
15. The grid for a battery of aspect 9, wherein the cross-section comprises at least one convex surface.
16. The grid for a battery of aspect 9, wherein the cross-section does not include any planar surfaces.
17. The grid for a battery of aspect 9, wherein the wire elements comprise lead alloy.
18. The grid for a battery of aspect 9, wherein the cross-section has a perimeter length and a cross-sectional area, wherein a ratio between the perimeter length and the cross-sectional area is at least 4.01:1.
19. A grid for a battery, comprising:
   a grid network bordered by at least one frame element, one of the frame elements having a current collector lug;
   the grid network comprising a plurality of spaced apart generally vertically extending and generally horizontally extending grid wire elements, each grid wire element having opposed ends, selected ones of the grid wire elements being joined at one of their ends to the at least one frame element, each opposed end being joined to one of a plurality of nodes to define a plurality of open spaces, wherein each of the plurality of open spaces extends from a front plane of the grid to a back plane of the grid, across from one generally horizontally extending grid wire element to an adjacent generally horizontally extending grid wire element and across from one generally vertically extending grid wire element to an adjacent generally vertically extending grid wire element, wherein at least a portion of each of the plurality of open spaces are bordered by concave surfaces of the wires.
20. The grid for a battery of aspect 19, wherein a node comprises the connection of at least two generally vertically extending wire elements and at least two generally horizontally extending wire elements.
21. The grid for a battery of aspect 19, wherein a cross-section of one of the generally vertically or horizontally extending wire elements comprises at least two concave surfaces.
22. The grid for a battery of aspect 19, wherein a cross-section of one of the generally vertically or horizontally extending wire elements comprises at least at least one concave surface and one planar surface.
23. The grid for a battery of aspect 19, wherein a cross-section of one of the generally vertically or horizontally extending wire elements comprise at least one convex surface and at least one concave surface.
24. The grid for a battery of aspect 19, wherein a cross-section of one of the generally vertically or horizontally extending wire elements does not include any planar surfaces.
25. The grid for a battery of aspect 19, wherein the wire elements comprise lead alloy.
26. A tool for forming a battery grid, comprising:
   a first die portion defining a first forming channel configured to form a portion of a grid wire to have a similar shape as the first forming channel when the portion of the grid wire is formed within the first forming channel,
   wherein the first forming channel comprises a cross-section with at least one convex surface configured to form a concave surface into a cross-section of the grid wire.
27. The tool for forming a battery grid of aspect 26, further comprising:
   a second die portion defining a second forming channel configured to form a second portion of the grid wire to have a similar shape from the second forming channel when the second portion of the grid wire is formed within the second forming channel,
   wherein the second forming channel comprises a cross-section with at least one convex surface configured to form a concave surface into a cross-section of the grid wire,
   wherein the first forming channel is aligned with the second forming channel to partially enclose the grid wire within the first die portion and the second die portion.

## Claims

1. A method of making a grid for a battery, comprising:
punching material out of a strip of material to form a grid network of a plurality of wires bordered by at least one frame element having a current collector lug;
forming the plurality of wires of the grid with a die to change the cross-sectional shape of the wires, wherein a cross-section of one of the plurality of wires after forming comprises at least one concave surface.

2. The method of making a grid for a battery of any of claims 1 and 3-6, wherein the cross-section comprises at least one convex surface.

3. The method of making a grid for a battery of any of claims 1-2 and 4-6, wherein the cross-section does not include any planar surfaces.

4. The method of making a grid for a battery of any of claims 1-3 and 5-6, wherein the material comprises lead alloy.

5. The method of making a grid for a battery of any of claims 1-4 and 6, further comprising:
forming a controlled surface roughness having a size of about 10 micro inches Ra to 1000 micro inches Ra on the at least one concave surface to promote adhesion to the concave surface of the wire of a subsequently applied and cured battery paste.

6. The grid for a battery of any of claims 1-5, wherein the cross-section has a perimeter length and a cross-sectional area, wherein a ratio between the perimeter length and the cross-sectional area is at least 4.01:1.

7. A grid for a battery, comprising:
a grid network bordered by at least one frame element having a current collector lug;
the grid network comprising a plurality of spaced apart generally vertically extending and generally horizontally extending grid wire elements, each grid wire element having opposed ends, each opposed end being joined to one of a plurality of nodes to define a plurality of open spaces, selected ones of the grid wire elements being joined at one of their ends to the one or more frame elements, wherein the wire elements have a cross-section that comprises at least one concave surface.

8. The grid for a battery of any of claims 7 and 9-10, wherein the cross-section comprises a first axis, a second axis, a first concave surface, a second concave surface, a third concave surface and a fourth concave surface;
wherein the first axis is perpendicular to the second axis;
wherein the first concave surface and the second concave surface are mirror images of each other across the first axis, the third concave surface and the fourth concave surface are mirror images of each other across the first axis, the second concave surface and the third concave surface are mirror images of each other across the second axis, and the first concave surface and the fourth concave surface are mirror images of each other across the second axis.

9. The grid for a battery of any of claims 7-8 and 10, wherein the wire elements comprise lead alloy.

10. The grid for a battery of any of claims 7-9, wherein the cross-section has a perimeter length and a cross-sectional area, wherein a ratio between the perimeter length and the cross-sectional area is at least 4.01:1.

11. A grid for a battery, comprising:
a grid network bordered by at least one frame element, one of the frame elements having a current collector lug;
the grid network comprising a plurality of spaced apart generally vertically extending and generally horizontally extending grid wire elements, each grid wire element having opposed ends, selected ones of the grid wire elements being joined at one of their ends to the at least one frame element, each opposed end being joined to one of a plurality of nodes to define a plurality of open spaces, wherein each of the plurality of open spaces extends from a front plane of the grid to a back plane of the grid, across from one generally horizontally extending grid wire element to an adjacent generally horizontally extending grid wire element and across from one generally vertically extending grid wire element to an adjacent generally vertically extending grid wire element, wherein at least a portion of each of the plurality of open spaces are bordered by concave surfaces of the wires.

12. The grid for a battery of any of claims 11 and 13, wherein a cross-section of one of the generally vertically or horizontally extending wire elements does not include any planar surfaces.

13. The grid for a battery of any of claims 11-12, wherein the wire elements comprise lead alloy.

14. A tool for forming a battery grid, comprising:
a first die portion defining a first forming channel configured to form a portion of a grid wire to have a similar shape as the first forming channel when the portion of the grid wire is formed within the first forming channel,
wherein the first forming channel comprises a cross-section with at least one convex surface configured to form a concave surface into a cross-section of the grid wire.

15. The tool for forming a battery grid of claim 14, further comprising:
a second die portion defining a second forming channel configured to form a second portion of the grid wire to have a similar shape from the second forming channel when the second portion of the grid wire is formed within the second forming channel,
wherein the second forming channel comprises a cross-section with at least one convex surface configured to form a concave surface into a cross-section of the grid wire,
wherein the first forming channel is aligned with the second forming channel to partially enclose the grid wire within the first die portion and the second die portion.
